# EUROPEAN PATENT APPLICATION

(11) **EP 4 191 705 A1**
(43) Date of publication of application: **07.06.2023**
(21) Application number: 21895035.0
(22) Date of filing: 15.11.2021
(51) Int. Cl.: H01M 4/36, H01M 4/38, H01M 4/587, H01M 10/052

(54) **ANODE ACTIVE MATERIAL AND LITHIUM SECONDARY BATTERY COMPRISING SAME**

(30) Priority: 17.11.2020 KR 20200153782
(71) Applicant: Samsung SDI Co., Ltd., Yongin-si, Gyeonggi-do 17084 (KR)
(72) Inventor: LEE, Dae-Hyeok, Yongin-si, Gyeonggi-do 17084 (KR); KIM, Youngugk, Yongin-si, Gyeonggi-do 17084 (KR); KIM, Jaemyung, Yongin-si, Gyeonggi-do 17084 (KR); NAH, Jaehou, Yongin-si, Gyeonggi-do 17084 (KR); SHIN, Changsu, Yongin-si, Gyeonggi-do 17084 (KR); YOUM, Chul, Yongin-si, Gyeonggi-do 17084 (KR); WON, Jongmin, Yongin-si, Gyeonggi-do 17084 (KR); LEE, Jungho, Yongin-si, Gyeonggi-do 17084 (KR); CHU, Heeyoung, Yongin-si, Gyeonggi-do 17084 (KR)
(74) Representative: Taor, Simon Edward William
(86) International application number: PCT/KR2021/016605
(87) International publication number: WO 2022/108267

(57) **Abstract**

Provides are an anode active material for a lithium secondary battery and a lithium secondary battery comprising same, wherein the anode active material for a lithium secondary battery comprises a silicon-carbon composite having a void in the central portion, the radius of the central portion corresponds to 30 % to 50 % of the radius of the anode active material for a lithium secondary battery, and the silicon-carbon composite includes silicon nanoparticles and amorphous carbon.

## Description

### TECHNICAL FIELD

It relates to anode active material and a lithium secondary battery including the same.

### BACKGROUND ART

A lithium secondary battery, which has recently drawn attention as a power source for small portable electronic devices, uses an organic electrolyte solution and thereby, has twice or more as high a discharge voltage as a conventional battery using an alkali aqueous solution, and accordingly, has high energy density.

As for a cathode active material of a lithium secondary battery, oxides including lithium and a transition metal with a structure capable of intercalating/deintercalating lithium ions, such as LiCoO₂, LiMn₂O₄, LiNi₁₋ₓCoₓO₂ (0 < x < 1), and the like have been mainly used.

As for anode active materials, various carbon-based materials such as artificial graphite, natural graphite, and hard carbon capable of intercalating and deintercalating lithium ions have been used, but a graphite anode active material has low capacity of 360 mAh/g and thus, has low specific capacity so that investigation 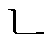 into a non-carbon-based anode active material based on silicon or tin have been undertaken in order to have higher capacity.

### TECHNICAL PROBLEM

One embodiment provides an anode active material for a lithium secondary battery being capable of suppressing volume expansion during charging and discharging, thereby improving the cycle-life characteristics.

Another embodiment provides a lithium secondary battery including the anode active material.

### TECHNICAL SOLUTION

According to one embodiment, an anode active material for a lithium secondary battery including a silicon-carbon composite having a void in a central portion and a radius of the central portion corresponding to 30 % to 50 % of a radius of the anode active material for the lithium secondary battery, and the silicon-carbon composite includes silicon nanoparticles and amorphous carbon, is provided.

The central portion may include at least one silicon nanoparticle.

The silicon nanoparticle may have a particle diameter of 10 nm to 200 nm.

The anode active material may have a particle diameter of 5 µm to 20 µm.

The silicon nanoparticles may be a flake type.

The silicon nanoparticles may have an aspect ratio (width/thickness) of 5 to 20. The silicon nanoparticles may have a full width at half maximum FWHM (111) at a (111) plane of 0.5 degrees (°) to 7 degrees (°) found by X-ray diffraction using a CuKa ray.

According to another embodiment, a lithium secondary battery including the anode including the anode active material, a cathode including a cathode active material, and a non-aqueous electrolyte, is provided.

Other embodiments are included in the following detailed description.

### ADVANTAGEOUS EFFECTS

An anode active material for a lithium secondary battery may reduce stress due to the volume expansion caused during charge and discharge, thereby exhibiting excellent cycle-life characteristics.

### BRIEF DESCRIPTION OF THE DRAWINGS

FIG. 1 is a schematic view showing an anode active material for a lithium secondary battery according to one embodiment.
FIG. 2 is a schematic view of a lithium secondary battery according to another embodiment.
FIG. 3 is a graph showing X-ray photoelectron spectroscopy (XPS) analysis for the anode active material according to Example 1.

### BEST MODE FOR PERFORMING INVENTION

Hereinafter, embodiments of the present invention are described in detail. However, these embodiments are merely examples, the present invention is not limited thereto, and the present invention is defined by the scope of claims.

An anode active material for a lithium secondary battery according to one embodiment may include a silicon-carbon composite having a void in a central portion, and the silicon-carbon composite may include silicon nanoparticles and amorphous carbon. In the anode active material, the central portion may have a radius corresponding to 30 % to 50 % of a radius of the anode active material for the lithium secondary battery.

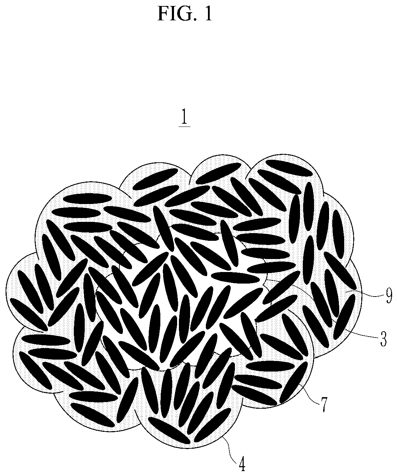

FIG. 1 schematically shows the anode active material, and the anode active material 1 includes a silicon-carbon composite including a void 4 in a central portion 3, and the silicon carbon composite includes silicon nanoparticles 7 and amorphous carbon 9.

In addition, a radius a of the central portion 3 may correspond to 30 % to 50 % of a radius b of the active material.

As such, the anode active material according to one embodiment has a void in a central portion, and in the central portion, amorphous carbon may not be substantially included, but only silicon nanoparticles may be included. In case of including no amorphous carbon and only silicon nanoparticles in the central portion, voids presented in the central portion may absorb the volume expansion which may be generated during charge and discharge, and thus, the total volume expansion of the anode active material may be effectively prevented.

In one embodiment, the radius of the central portion may be 30 % to 50 % of the radius of the anode active material. When the radius is smaller than the range, it is difficult to absorb the volume expansion caused during initial charge and discharge, and thus, the initial expansion rate may be extremely increased. In addition, when the radius of the central portion is larger than the range, an SEI (solid electrolyte interface) may be largely produced due to the side-reaction of the anode active material and the electrolyte as the repeated charge and discharge occur, so that the total volume expansion of the anode active material may be extremely enlarged, and the cycle-life characteristics may also be deteriorated.

The anode active material may have a particle diameter of 5 µm to 20 µm. In one embodiment, the size and the particle diameter may be an average particle diameter. In this case, the average particle diameter may mean a particle diameter (D50) measured as a cumulative volume. When a definition is not otherwise provided, an average particle diameter indicates an average particle diameter (D50) where a cumulative volume is about 50 volume% in a particle distribution. The average particle diameter (D50) may be measured by a method well known to those skilled in the art, for example, by a particle size analyzer, or by a transmission electron microscopic image or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

When the particle diameter of the anode active material is within the range, more excellent high-rate characteristics and cycle-life characteristics may be exhibited.

No void in the central portion causes the volume expansion of the anode active material to extremely occur during charge and discharge.

In one embodiment, the central portion does not include amorphous carbon, and only amorphous carbon may be presented in a surface portion of the anode active material. Herein, the surface portion refers to an area from the central portion to a outermost surface of the anode active material. If the central portion includes amorphous carbon the same only the surface portion, space which may absorb the volume expansion of the anode active material during charge and discharge is not presented, and thus, the volume expansion of the anode active material may extremely occur during charge and discharge. In one embodiment, although amorphous carbon may be slightly included in the central portion as an impurity, it is presented at a level close to zero, which indicates to not be substantially present in the central portion.

In addition, the silicon nanoparticles may be totally, substantially, and uniformly included in the anode active material, and that is, is presented in the central portion and the surface portion at the substantially uniform concentration. When silicon nanoparticles are totally, substantially, and uniformly presented in the anode active material, the amount of silicon is high, so that the high capacity may be realized. If the silicon nanoparticles are only presented in the central portion and are not presented in the surface portion, the capacity may be deteriorated.

In anode active material according to one embodiment, the silicon nanoparticles are presented in both the central portion and the surface portion, and amorphous carbon is not presented in the central portion and is only presented in the surface, and this indicates that the surface of the anode active material includes the silicon-carbon composite. As such, inclusion of the silicon-carbon composite in the surface portion renders the improved capacity, rather than an active material including only amorphous carbon.

The silicon-carbon composite according to one embodiment includes a secondary particle in which at least one silicon nanoparticle is agglomerated, amorphous carbon positioned by surrounding on the surface of the secondary particle, and amorphous carbon filled between the primary particles to locate and surround the surface of the primary particle. The filling of amorphous carbon between the primary particles may be effectively prevented to directly expose the silicon nanoparticles to the electrolyte, thereby forming a more stable interface and to more effectively buffer the volume expansion of the silicon nanoparticles. In addition, as amorphous carbon is filled between the silicon nanoparticles to be positioned on the surface, it acts as a passage for transferring electrons between the silicon nanoparticle and the electrolyte, thereby further improving conductivity, which allows electrode resistance to be more reduced.

In addition, the surface portion may be a dense layer in which voids do not exist and substantially do not exist. As such, the anode active material according to one embodiment includes the surface portion in a dense form in which voids do not exist or substantially do not exist, and thus, the penetration of the electrolyte into the inside active material may be suppressed, thereby reducing the side reaction with the electrolyte and maintaining the cycle-life characteristics.

The amorphous carbon may be soft carbon, hard carbon, mesophase pitch carbide, sintered cokes, or combinations thereof.

The silicon nanoparticles may have a particle diameter of 10 nm to 200 nm. When the size of the silicon nanoparticles is within the range, the side reaction between the anode active material and the electrolyte solution may be suppressed and the expansion of the Si nanoparticles may be reduced, so that the cycle-life characteristics and the initial efficiency may be improved.

In one embodiment, the secondary particle in which primary particles are agglomerated may have a particle diameter of 2 µm to 15 µm, or 5 µm to 10 µm. When the particle diameter of the secondary particle is within the range, the more excellent high-rate characteristics and the cycle-life characteristics may be exhibited.

The silicon nanoparticle may be a flake type. That is, the silicon nanoparticles may be a flake type having a longer axis and a shorter axis, and herein, the ratio of the longer axis/ shorter axis of the Si particle, for example, an aspect ratio (width/thickness), may be 5 to 20. When the ratio of the longer axis/the shorter axis of the Si particle is within the range, the expansion of the silicon nanoparticle may be decreased, thereby improving the cycle-life characteristics and the initial efficiency of the battery including the active material.

In one embodiment, the silicon primary particle may have a full width at halt maximum, FWHM (111) found through X-ray diffraction using a CuKa ray at a (111) plane ranging from 0.5 degrees (°) to 7 degrees (°). When the full width at halt maximum FWHM (111) of the silicon primary particle is within the range, the cycle-life characteristics of the battery may be improved.

The X-ray diffraction measurement may be measured by using a CuKα ray as a target ray, and herein, the measurement condition was 2θ=40° to 50°, a scan speed (°/S) of 0.04 to 0.06, and a step size (°/step) of 0.01 to 0.03.

In one embodiment, a mixing ratio of the silicon nanoparticles and amorphous carbon included in the anode active material may be 80:20 to 60:40 by weight ratio. When the mixing ratio of the silicon nanoparticles and amorphous carbon is satisfied into the range, the physical properties such as cycle-life expansion rate and capacity retention may be effectively maintained.

The anode active material according to one embodiment may be prepared by the following procedures.

First of all, silicon nanoparticles are prepared. The silicon nanoparticles may be nanoparticles having a particle diameter of 10 nm to 200 nm. Such silicon nanoparticles may be prepared from the general nanoparticle preparation such as a pulverization technique. The silicon nanoparticles may have a full width at a half maximum, FWHM (111) found through X-ray diffraction using a CuKa ray at a (111) plane ranging from 0.35 (°) to 7 degrees (°). The silicon nanoparticle may have an aspect ratio (width/thickness) of 5 to 20.

The silicon nanoparticles are added to a solvent to prepare a silicon particle liquid. The solvent may suitably be alcohols which do not oxidize the silicon particle and may be readily volatilized, and examples may be isopropyl alcohol, ethanol, methanol, butanol, N-methyl pyrrolidone, propylene glycol, or combinations thereof. The silicon particle liquid may have a concentration of 10 wt% to 30 wt%.

During addition to the solvent, a dispersing agent may be further added. The dispersing agent may be stearic acid, polyvinylpyrrolidone, polyvinyl alcohol, polyacrylic acid, gallic acid, carboxymethyl cellulose, sucrose, ethylene glycol, citric acid, or combinations thereof.

The mixing may be performed by using a bead mill or a ball mill. The mixing may be performed for 0.5 hours to 3 hours, but is not limited thereto. In addition, the mixing may be performed at a speed of 1000 rpm to 3000 rpm, but is not limited thereto.

In case of further using the dispersing agent, the mixing ratio of the silicon particle and the dispersing agent may be 3:1 by weight to 9:1 by weight. When the mixing ratio is within the range, the dispersing agent may be more uniformly distributed on the surface of the silicon particle to increase the efficiency, particularly, milling efficiency using a mill, during the mixing process. In addition, it may further prevent the oxidation of silicon and further agglomerate primary particles in the mixing process and the subsequent spray-drying process.

The resulting mixed liquid may be further dispersed by distributing with a homogenizer.

Thereafter, the prepared silicon particle liquid is spray-dried. According to the spray-drying, the silicon nanoparticles, as primary particles, may be agglomerated to prepare silicon secondary particles. The spray-drying may be performed at 120 °C to 170 °C. When the spray-drying is performed at the temperature range, the silicon primary particles may be more densely agglomerated, and that is, the distance between the silicon primary particles and the silicon secondary particles agglomerated thereof are densely agglomerated. Accordingly, the voids between the silicon primary particles and between the silicon secondary particles may be formed smaller, and thus, the amount of amorphous carbon included in the anode active material may be suitably reduced in a desired level.

Thereafter, the resulting secondary particle is mixed with an amorphous carbon precursor.

Herein, the mixing ratio of the secondary particle and the amorphous carbon precursor may be 80:20 to 60:40 by weight ratio. When the mixing ratio of the secondary particle and the amorphous carbon precursor is within the range, the amorphous carbon is not included in the final anode active material in an excessive amount, and an amorphous carbon layer is not formed on the surface of the final anode active material, so that the more suitable silicon utilization rate may be obtained, thereby exhibiting the excellent initial efficiency.

The amorphous carbon precursor may be coal pitch, mesophase pitch, petroleum pitch, mesocarbon pitch, coal-based oil, petroleum-based heavy oil, or a polymer resin such as a phenol resin, a furan resin, and a polyimide resin.

The obtained mixture is heat-treated to prepare an anode active material for a lithium secondary battery.

The heat-treatment may be performed by increasing a temperature to 700 °C to 1000 °C at an increasing rate of 10 °C/minute to 15 °C/minute and heat-treating at the increased temperature. The time for heat-treating at the increased temperature may be 1 hour to 4 hours.

The heat-treatment renders to melt the amorphous carbon precursor which is diffused inside the active material, thereby converting amorphous carbon, and when the increasing rate is controlled in the process, the conversion to amorphous carbon may occur in a distributed state on the surface portion, before distribution of the amorphous carbon precursor into the central portion. Accordingly, amorphous carbon is not presented in the central portion of the anode active material, and may be presented in the surface portion thereof. In addition, the heat-treatment at the increasing rate prepares the surface portion in which amorphous carbon is distributed and the central portion in which only silicon nanoparticles are presented, and herein, the radius of the central portion may correspond to 30 % to 50 % of the radius of the anode active material.

When the increasing rate of the heat-treatment is lower than the range, it is not desired for the amorphous carbon precursor to be diffused into the central portion, and then be converted into amorphous carbon.

In addition, during the heat-treatment, the amorphous carbon precursor is positioned between the silicon nanoparticles on which the amorphous carbon precursor is positioned, primary particles to surround on the surface of the secondary particles. Herein, when the increasing rate of the heat treatment is higher than the range, the amorphous carbon precursor is not penetrated into the secondary particles at all and is carbonized in a state of only being positioned on the outer surface of the secondary particles.

The heat-treatment may be performed under a N₂ atmosphere, or an argon atmosphere. The atmosphere of the heat treatment at the condition prevents the oxidation of silicon and the production of SiC, and to effectively generate amorphous carbon, thereby reducing resistance of the active material.

Thereafter, pulverization of the prepared anode active material may be further performed and the pulverization may be by an air jet mill, a cutter mill, or a planetary mill. The pulverization may be performed until the particle diameter of the final active material is to be 5 µm to 20 µm.

According to one embodiment, a lithium secondary battery including an anode, a cathode, and an electrolyte is provided.

The anode includes a current collector and an anode active material layer formed on the current collector and including the anode active material according to one embodiment.

The anode active material layer may further include a crystalline carbon anode active material. The example of the crystalline carbon negative active material may be graphite such as unspecified-shaped, sheet-shaped, flake-shaped, spherical-shaped, or fiber-shaped natural graphite or artificial graphite.

When the anode active material layer includes the anode active material according to one embodiment as a first anode active material, and a crystalline carbon anode active material as a second anode active material, the first anode active material is positioned between the second anode active material particles to well contact the second anode active material, thereby more effectively suppressing the anode expansion. Herein, the mixing ratio of the first anode active material to the second anode active material may be 1:99 to 40:60 by weight ratio. When the first anode active material and the second anode active material are used in the range, the current density of the anode may be more improved and a thinner electrode may be prepared. In addition, the first anode active material including silicon may be more uniformly distributed in the anode, and thus the expansion of the anode may be more effectively suppressed.

In the anode active material layer, an amount of the anode active material may be 95 wt% to 99 wt% based on the total weight of the anode active material layer.

The anode active material layer may include a binder, and optionally a conductive material. In the anode active material layer, an amount of the binder may be 1 wt% to 5 wt% based on the total weight of the anode active material layer. Furthermore, in case of further including the conductive material, the anode active material may be included in an amount of 90 wt% to 98 wt%, the binder may be included in an amount of 1 wt% to 5 wt%, and the conductive material may be included in an amount of 1 wt% to 5 wt%.

The binder improves binding properties of anode active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may include a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the aqueous binder is used as a anode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The anode may be formed by mixing an anode active material, a binder, and optionally a conductive material in a solvent to prepare an active material composition, and coating the active material composition on a current collector. The solvent may be water.

Such an anode preparation method is well known and thus is not described in detail in the present specification.

The cathode includes a current collector and a cathode active material layer including a cathode active material and formed on the current collector.

The cathode active material may include lithiated intercalation compounds that reversibly intercalate and deintercalate lithium ions, and specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D¹₂ (0.90 ≤ a≤1.8, 0 ≤ b≤ 0.5); LiₐA_{1-b}X_{b}O_{2-c1}D¹_{c1} (0.90 ≤ a ≤ 1.8, 0 ≤ b ≤ 0.5, 0 ≤ c1 ≤ 0.05); LiₐE_{1-b}X_{b}O_{2-c1}D¹_{c1} (0.90 ≤ a ≤ 1.8, 0 ≤ b ≤ 0.5, 0 ≤ c1 ≤ 0.05); LiₐE_{2-b}X_{b}O_{4-c1}D¹_{c1} (0.90 ≤ a ≤ 1.8, 0 ≤ b ≤ 0.5, 0 ≤ c1 ≤ 0.05); LiₐNi_{1-b-c}Co_{b}X_{c}D¹ₐ (0.90 ≤ a ≤ 1.8, 0 ≤ b ≤ 0.5, 0 ≤ c ≤ 0.5, 0 < a ≤2); LiₐNi_{1-b-c}Co_{b}X_{c}O_{2-α}T_{α} (0.90 ≤ a≤ 1.8, 0 ≤ b ≤ 0.5, 0 ≤ c ≤ 0.5, 0 < α < 2); LiₐNi_{1-b-c}Co_{b}X_{c}O_{2-α}T₂ (0.90 ≤ a ≤ 1.8, 0 ≤ b ≤0.5, 0 ≤ c ≤ 0.5, 0 < α < 2); LiₐNi_{1-b-c}Mn_{b}X_{c}D¹_{α} (0.90 ≤ a ≤ 1.8, 0 ≤ b ≤ 0.5, 0 ≤ c ≤ 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O₂₋ₐT₂ (0.90 ≤ a≤ 1.8, 0 ≤ b ≤0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂ PO₄₃ (0 ≤ f ≤2); Li _{(3-f)}Fe₂ PO₄₃ (0 ≤ f ≤ 2); LiₐFePO₄ (0.90 ≤ a ≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a cathode active material by using these elements in the compound, and for example, the method may include any coating method such as spray coating, dipping, and the like, but is not illustrated in more detail since it is well-known in the related field.

In the cathode, an amount of the cathode active material may be about 90 wt% to about 98 wt% based on the total weight of the cathode active material layer.

In one embodiment, the cathode active material layer may further include a binder and a conductive material. Herein, the amount of the binder and the conductive material may be 1 wt% to 5 wt%, respectively, based on the total amount of the cathode active material layer.

The binder improves binding properties of cathode active material particles with one another and with a current collector, and the examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, a nickel foil, or a combination thereof, but is not limited thereto.

The cathode active material layer and the anode active material layer may be formed by mixing an active material, a binder, and optionally a conductive material in a solvent to prepare an active material composition, and coating the active material composition on a current collector. Such an active material layer preparation method is well known and thus is not described in detail in the present specification. The solvent includes N-methylpyrrolidone and the like, but is not limited thereto. In addition, when the binder is a water-soluble binder in the negative active material layer, the solvent may be water.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone and the like. In addition, the alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance, and it may be well understood to one of ordinary skill in the related art.

Furthermore, the carbonate-based solvent may include a mixture of a cyclic carbonate and a linear carbonate. Herein, when the mixture of cyclic carbonate and linear carbonate mixed together in a volume ratio of about 1:1 to about 1:9 is used as an electrolyte, it may have enhanced performance.

When the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

Herein, when the cyclic carbonate and the chain carbonate or the cyclic carbonate and the propionate-based solvent are mixed, they may be mixed in a volume ratio of about 1:1 to about 1:9 and thus performance of an electrolyte solution may be improved. In addition, when the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound of Chemical Formula 1.

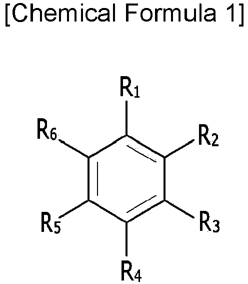

(In Chemical Formula 1, R₁ to R₆ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound of Chemical Formula 2 in order to improve a cycle-life of a battery.

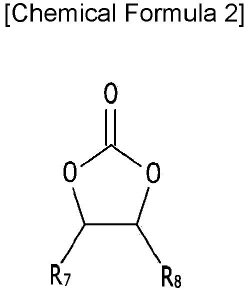

(In Chemical Formula 2, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R₇ and R₈ are not both hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving a cycle-life may be used within an appropriate range.

The electrolyte may further include vinyl ethylene carbonate, propane sultone, succinonitrile, or a combination thereof, and the amount used may be appropriately adjusted.

The lithium salt dissolved in an organic solvent supplies a battery with lithium ions, basically operates the lithium secondary battery, and improves transportation of the lithium ions between cathode and anode. Examples of the lithium salt include one or two or more one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiPO₂F₂, LiN((CₓF₂ₓ₊₁SO₂)(C_{y}F_{2y+1}SO₂), wherein, x and y are natural numbers, for example an integer ranging from 1 to 20, lithium difluoro(bisoxolato) phosphate), LiCl, Lil, LiB(C₂O₄)₂ (lithium bis(oxalato) borate: LiBOB), and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The lithium secondary battery may further include a separator between the anode and the cathode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

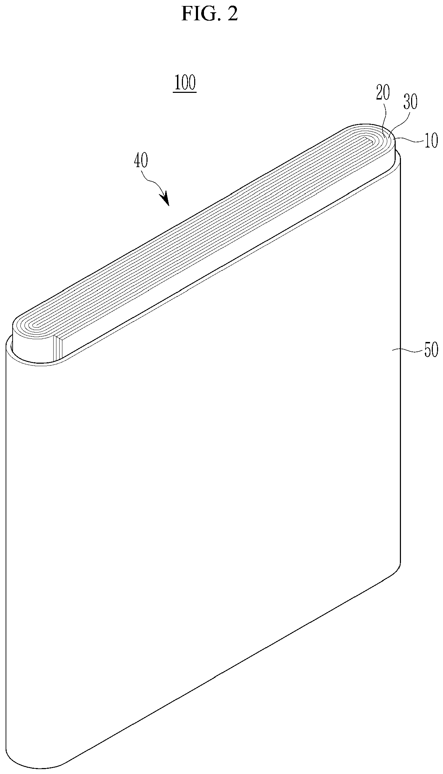

FIG. 2 is an exploded perspective view of a lithium secondary battery according to one embodiment. The lithium secondary battery according to an embodiment is illustrated as a prismatic battery but is not limited thereto, and may include variously-shaped batteries such as a cylindrical battery, a pouch battery, and the like.

Referring to FIG. 2, a lithium secondary battery 100 according to an embodiment includes an electrode assembly 40 manufactured by winding a separator 30 interposed between a cathode 10 and an anode 20, and a case 50 housing the electrode assembly 40. An electrolyte (not shown) may be impregnated in the cathode 10, the anode 20, and the separator 30.

### MODE FOR PERFORMING THE INVENTION

Hereinafter, examples of the present invention and comparative examples are described. These examples, however, are not in any sense to be interpreted as limiting the scope of the invention.

### (Example 1)

Flake type silicon nanoparticles with an average particle diameter D50 of 100 nm and a polyvinyl pyrrolidone dispersing agent were mixed in an ethanol solvent and dispersed using a ball mill at a speed of 1500 rpm for 1 hour to prepare a silicon particle liquid with a concentration of 11 wt%. Herein, the mixing ratio of the silicon nanoparticle and the polyvinylpyrrolidone dispersing agent was set to 5:1 by weight ratio.

The obtained Si particle had a full width at a half maximum, FWHM (111) of an X-ray diffraction using a CuKa ray at a (111) plane of 0.5 degrees (°). Herein, the X-ray diffraction analysis was measured under a condition of a scan speed (°/S) of 0.054, a step (°/step) of 0.01313, and time per step of 62.475 s in a range of 2θ = 10° to 50°. Furthermore, the Si particle had an aspect ratio (width/thickness) of about 5.

The obtained mixture was homogeneously dispersed using a homogenizer for 30 minutes.

Thereafter, the resulting homogenized dispersed liquid was spray-dried at 130 °C. According to the spray-drying, the silicon nanoparticles, the primary particles, were agglomerated to prepare secondary particles.

The prepared secondary particles were mixed with mesocarbon pitch at a 77:23 weight ratio. The obtained mixture was heat-treated at 800 °C for 2 hours after increasing a temperature to 800 °C at an increasing rate of 10 °C/minute. The heat treatment was performed under an N₂ atmosphere.

The heat-treated product was pulverized using an air jet mill to prepare an anode active material having an average particle diameter D50 of 8 µm.

The prepared anode active material was a silicon-carbon composite in which voids were formed in a central portion and in which the silicon nanoparticles were only presented in the central portion. The central portion had a size (diameter) of 3 µm, and the prepared anode active material had an average particle diameter D50 of 8 µm. Thus, the radius size of the central portion corresponded to 37.5 % of the radius of the anode active material.

97.8 wt% of the anode active material, 1.2 wt% of a styrene butadiene rubber, and 1.0 wt% of carboxymethyl cellulose were mixed to prepare an anode active material slurry, and then the slurry was coated on a Cu foil current collector and dried followed by pressing, to prepare an anode.

The anode, a lithium counter electrode, and an electrolyte were used to fabricate a half-cell having a theoretical capacity of 530 mAh/g. The electrolyte was used by dissolving 1.5 M LiPF₆ in a mixed solvent of ethylene carbonate, ethyl methyl carbonate, and dimethyl carbonate (a volume ratio of 20:10:70).

### (Example 2)

An anode active material was prepared by the same procedure as in Example 1, except that the prepared secondary particles and mesocarbon pitch were mixed at a weight ratio of 80:20 and the heat-treatment was performed at an increasing rate of 15 °C/minute to prepare an anode active material for a lithium secondary battery with an average particle diameter D50 of 8 µm.

The prepared anode active material was a silicon-carbon composite in which voids were formed in a central portion and in which the silicon nanoparticles were only presented in the central portion. The central portion had a size (diameter) of 3.6 µm, and the prepared anode active material had an average particle diameter D50 of 8 µm. Thus, the radius size of the central portion was corresponded to 45 % of the radius of the anode active material.

### (Comparative Example 1)

An anode active material was prepared by the same procedure as in Example 1, except that the prepared secondary particles and mesocarbon pitch were mixed at a weight ratio of 60:40 and the heat-treatment was performed at an increasing rate of 5 °C/minute to prepare an anode active material for a lithium secondary battery with an average particle diameter D50 of 8 µm.

The prepared anode active material was a silicon-carbon composite as a whole, that is, was an anode active material in which the silicon-carbon composite was presented at both the central portion and the surface portion, and voids was not presented.

### (Comparative Example 2)

An anode active material was prepared by the same procedure as in Example 1, except that the prepared secondary particles and mesocarbon pitch were mixed at a weight ratio of 80:20 and the heat-treatment was performed at an increasing rate of 5 °C/minute to prepare an anode active material for a lithium secondary battery with an average particle diameter D50 of 8 µm.

The prepared anode active material was a silicon-carbon composite as a whole, that is, was an anode active material in which a silicon-carbon composite was presented at both the central portion and the surface portion, and voids were presented.

### (Comparative Example 3)

An anode active material was prepared by the same procedure as in Example 1, except that the prepared secondary particles and mesocarbon pitch were mixed at a weight ratio of 72:28 and the heat-treatment was performed at an increasing rate of 7 °C/minute to prepare an anode active material for a lithium secondary battery with an average particle diameter D50 of 8 µm.

The prepared anode active material was a silicon-carbon composite in which voids were formed in a central portion and in which the silicon nanoparticles were only presented in the central portion. The central portion had a size (diameter) of 1.5 µm, and the prepared anode active material had an average particle diameter D50 of 8 µm. Thus, the radius size of the central portion was corresponded to 18.8 % of the radius of the anode active material.

### (Comparative Example 4)

An anode active material was prepared by the same procedure as in Example 1, except that the prepared secondary particles and mesocarbon pitch were mixed at a weight ratio of 90:10 and the heat-treatment was performed at an increasing rate of 20 °C/minute to prepare an anode active material for a lithium secondary battery with an average particle diameter D50 of 8 µm.

The prepared anode active material was a silicon-carbon composite in which voids were formed in a central portion and in which the silicon nanoparticles were only presented in the central portion. The central portion had a size (diameter) of 5.5 µm, and the prepared anode active material had an average particle diameter D50 of 8 µm. Thus, the radius of the central portion corresponded to 68.5 % of the radius of the anode active material.

### Experimental Example 1) Measurement of X-ray photoelectron spectroscopy (mapping test)

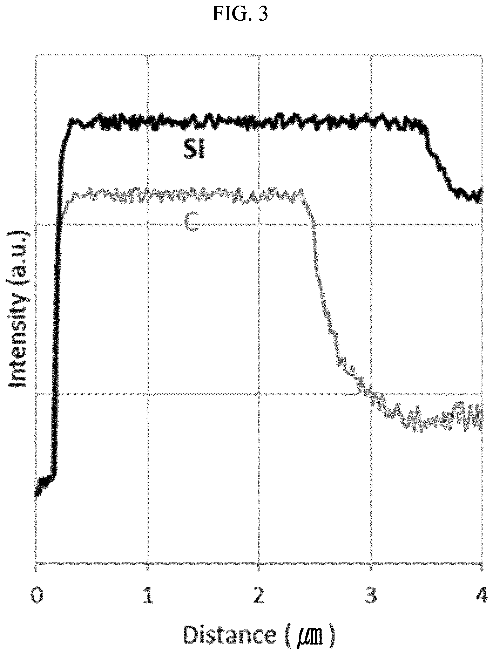

X-ray photoelectron spectroscopy (XPS) for the anode active material according to Example 1 was carried out to obtain the concentrations of Si and amorphous carbon (i.e. carbon) from a surface portion (X-axis distance in FIG.3: 0 µm) to a central portion (X-axis distance in FIG. 3: 4 µm), and the results are shown in FIG. 3. The X-ray photoelectron analysis was performed by sputtering argon ions to the active material at a sputtering rate of 0.5 nm/minute (conversion of SiO₂).

As shown in FIG. 3, in the anode active material according to Example 1, silicon was totally uniformly presented, but amorphous carbon was substantially rarely positioned in the central portion.

### Experimental Example 2) Evaluation of capacity of active material

The half-cells according to Example 1 and Comparative Examples 1, 3, and 4 were charged and discharged at 0.1 C once, and then the discharge capacity was measured. The results are shown in Table 1.

### Experimental Example 3) Evaluation of initial efficiency

The half-cells according to Example 1 and Comparative Examples 1, 3, and 4 were charged and discharged at 0.1 C once, and then charge capacity and discharge capacity were measured. A ratio of the discharge capacity to the charge capacity was calculated, and the results are shown in Table 1.

### Experimental Example 4) Evaluation of initial expansion rate

The half-cells according to Example 1 and Comparative Examples 1, 3, and 4 were charged and discharged at 0.1 C once. A cell thickness before charge and discharge and a cell thickness after charge and discharge were measured, a ratio of the cell thickness after charge and discharge once to the cell thickness before charge and discharge was obtained. The results are shown in

Table 1, as initial expansion rate.

### Experimental Example 5) Evaluation of cycle-life expansion rate

The half-cells according to Example 1 and Comparative Examples 1, 3, and 4 were charged and discharged at 0.1C once, 0.2 C once, and 0.5 C for 50 times. A cell thickness after charge and discharge at 0.2 C and a cell thickness after charge and discharge at 0.5 C for 50 cycles were measured, and a ratio of the cell thickness after charge and discharge for 50 cycles to the cell thickness before charge and discharge was obtained. The results are shown in Table 1, as the cycle-life expansion rate.

### Experimental Example 5) Capacity retention

The half-cells according to Example 1 and Comparative Examples 1, 3, and 4 were charged and discharged at 1 C for 100 cycles, and the discharge capacity at a 1 st cycle and the discharge capacity at a 100^{th} cycle were measured. A ratio of the discharge capacity at the 100^{th} cycle to the discharge capacity at the 1^{st} cycle was obtained, and the results are shown in Table 1, as capacity retention.

**(Table 1)**

| | Comparative Example 1 | Comparative Example 2 | Comparative Example 3 | Example 1 | Example 2 | Comparative Example 4 |
|---|---|---|---|---|---|---|
| Discharge capacity of anode active material discharge (mAh/g) | 1690.2 | 1954.3 | 1871.5 | 1917.4 | 1963.8 | 2137.1 |
| Initial efficiency (%) | 89.6 | 84.6 | 88.6 | 87.1 | 86.3 | 80.4 |
| Initial expansion rate (%) | 38.5 | 33.2 | 36.6 | 33.3 | 32.6 | 31.5 |
| Cycle-life expansion rate (%) | 24.6 | 41.2 | 25.7 | 26.1 | 28.1 | 38.7 |
| Capacity retention (%) | 79.6 | 53.1 | 77.7 | 77.1 | 75.3 | 63.0 |

As shown in Table 1, the anode active material of Examples 1 and 2 exhibited excellent discharge capacity and suitable initial efficiency, and further, maintained the cycle-life expansion rate and capacity retention at 30 % or less and 75 % or more, respectively, which corresponded to a substantially useful level, and exhibited the very low initial expansion rate. Whereas Comparative Example 1 exhibited extremely low discharge capacity and the deteriorated initial expansion rate, and Comparative Example 2 exhibited surprisingly deteriorated cycle-life expansion rate and capacity retention. In addition, Comparative Example 3 exhibited slightly low capacity and slightly high initial expansion rate, and Comparative Example 4 exhibited the deteriorated cycle-life expansion rate and capacity retention.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be examples but not limiting the present invention in any way.

## Claims

1. An anode active material for a lithium secondary battery, comprising:
a silicon-carbon composite having a void in a central portion,
a radius of the central portion corresponds to 30 % to 50 % of a radius of the anode active material for the lithium secondary battery, and
the silicon-carbon composite comprises silicon nanoparticles and amorphous carbon.

2. The anode active material for a lithium secondary battery of claim 1, wherein the central portion comprises at least one silicon nanoparticle.

3. The anode active material for a lithium secondary battery of claim 1, wherein the silicon nanoparticle has a particle diameter of 10 nm to 200 nm.

4. The anode active material for a lithium secondary battery of claim 1, wherein the anode active material has a particle diameter of 5 µm to 20 µm.

5. The anode active material for a lithium secondary battery of claim 1, wherein the silicon nanoparticle has a flake type.

6. The anode active material for a lithium secondary battery of claim of claim 1, wherein the silicon nanoparticle has an aspect ratio (width/thickness) of 5 to 20.

7. The anode active material for a lithium secondary battery of claim of claim 1, wherein the silicon nanoparticles has a full width at halt maximum FWHM (111) at a (111) plane of 0.5 degrees (°) to 7 degrees (°) found by X-ray diffraction using a CuKa ray.

8. A lithium secondary battery, comprising:
an anode comprising an anode active material of any one of claim 1 to claim 7;
a cathode comprising a cathode active material; and
a non-aqueous electrolyte.
